# EUROPEAN PATENT APPLICATION

(11) **EP 1 239 611 A2**
(43) Date of publication of application: **11.09.2002**
(21) Application number: 02004747.8
(22) Date of filing: 01.03.2002
(51) Int. Cl.: H04B 10/08

(54) **Network node apparatus and method of locating a fault in a network**

(30) Priority: 07.03.2001 JP 2001062744
(71) Applicant: NEC CORPORATION, Tokyo (JP)
(72) Inventor: Nishioka, Itaru, Minato-ku, Tokyo (JP); Suemura, Yoshihiko, Minato-ku, Tokyo (JP); Iwata, Atsushi, Minato-ku, Tokyo (JP)
(74) Representative: Glawe, Delfs, Moll & Partner

(57) **Abstract**

To identify a fault location easily if there is any fault detected in a network. If an optical path is switched from a working system to an auxiliary system due to a fault, an optical test signal originated from a network node apparatus located at an end point of the optical path is looped back by another network node apparatus on the optical path for the working system. This looped back optical signal is received by the network node apparatus of an originator, in which the signal quality of the optical test signal is measured by a determination device, thereby detecting the presence or absence of the fault on the path through which the optical test signal has been passed. A test receiver within the determination device measures a BER, an S/N ratio, an optical power, or an optical wavelength, whereby it is possible to detect not only the fault location due to disconnection of a link but also degradation in the signal quality.

## Description

### BACKGROUND OF THE INVENTION

### Field of the Invention

The present invention relates to a network node apparatus, a network system using the network node apparatus, and its fault location detecting method, and more particularly to a network node apparatus having an input terminal and an output terminal being to connected to a transmission line, which forms a bi-directional transmission path via the transmission line to the other network node apparatus, a network system using the network node apparatus, and its fault location detecting method.

### Description of the Related Art

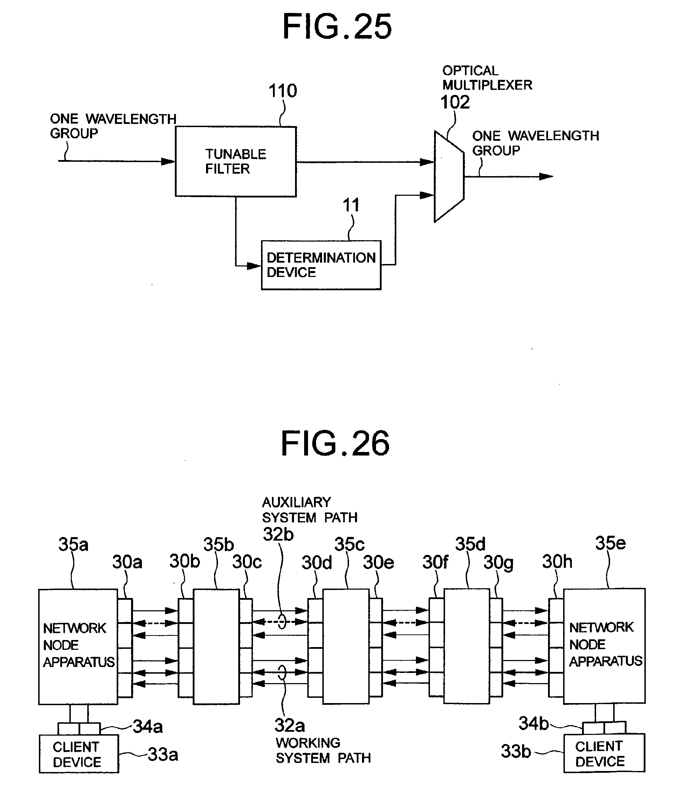

Conventionally, a network fault is detected for each link between adjacent network node apparatuses, and recovered for each link. For example, a network configuration of a path route switching system as disclosed in Japanese Patent Laid-Open No. 8-130523 is shown in FIG. 26. In FIG. 26, reference numerals 35a to 35e denote network node apparatuses, reference numerals 30a to 30h denote electrical termination sets within the network node apparatuses, reference numerals 33a and 33b denote client devices, reference numerals 34a and 34b denote electrical termination sets for the client device 33a, 33b, reference numeral 32a denotes a working system path (current path), and reference numeral 32b denotes an auxiliary system path (stand-by path).

A network in which the electrical termination sets 30a to 30h within the network node apparatuses are used for converting an optical signal to an electrical signal is typically called an opaque network. In such opaque network, each of the network node apparatuses 35a to 35e can monitor the fault information appended in the frame. Therefore, when a link fault occurs in the working system path 32a, for example, the working system path 32a is switched to the auxiliary system path 32b by the network node apparatuses 35a and 35e at both ends of the link, thereby recovering the link fault.

When the working system path 32a is switched to the auxiliary system path 32b due to the occurrence of the link fault, the location at which the link fault has occurred is within an interval in which the line of fiber is exchanged, whereby the network manager can identify the fault location easily.

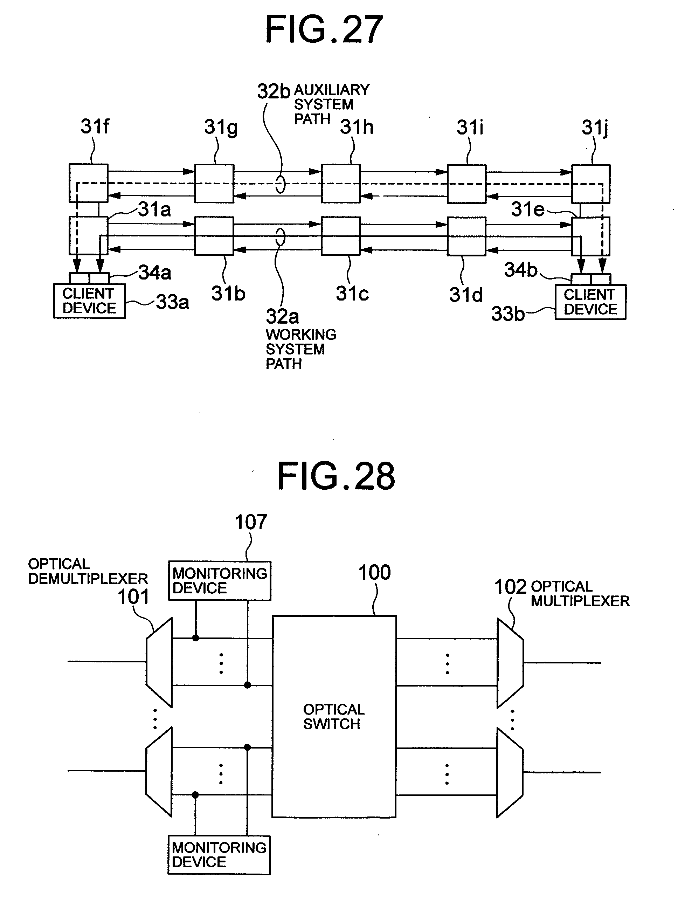

In contrast, a transparent optical network configuration is shown in FIG. 27. In this network, each node apparatus has no electrical termination set, and the route is switched in the optical signal. In FIG. 27, reference numerals 31a to 31e denote working system network node apparatuses, and reference numerals 31f to 31j denote auxiliary system network node apparatuses. The other like parts are designated by the same numerals in FIGS. 26 and 27.

Typically, since the optical signal is not converted into the electrical signal for every working system network node apparatuses 31a to 31e in the transparent network, each node apparatus can not read the information of the optical signal, whereby the fault information appended in the frame can not be monitored. In such a case, it is only the electrical termination sets 34a and 34b within the client devices 33a and 33b that can monitor the fault information. Therefore, when the link fault occurs in the working system path 32a, the working system path 32a is switched to the auxiliary system path 32b by the electrical termination sets 34a and 34b within the client devices 33a and 33b at both ends of the optical path.

However, there is a problem with the transparent optical network as shown in FIG. 27, that it is not easy to identify the interval of the optical path in which the fault has occurred because only the electrical termination sets 34a and 34b within the client devices 33a and 33b at both ends of the optical path can detect the fault information.

In order to solve the problem, a network node apparatus having monitoring devices as shown in FIG. 28 has been proposed as a technique for identifying the fault location. In FIG. 28, reference numeral 100 denotes an optical switch, reference numeral 101 denotes a optical demultiplexer, reference numeral 102 denotes a optical multiplexer, and reference numeral 107 denotes a monitoring device. In the network node apparatus of FIG. 28, a principal signal is demultiplexed in the network node apparatus, and converted from optical to electrical form by the monitoring device 107 to monitor the fault information.

However, with the above technique in which an optical/electrical converter having the same bit rate of the principal signal is required in each network node apparatus, there is a problem that a feature of a transparent optical network intrinsically not dependent on the bit rate is damaged, because the bit rate of the principal signal is limited due to the existence of this optical/electrical converter.

With the configuration as shown in FIG. 28, the number of monitoring devices 107 for monitoring the fault information and their precision is required to be increased as the number of optical wavelengths or the bit rate of the principal signal is increased, resulting in a problem that the costs are increased and the entire network node apparatus is at the higher price.

### SUMMARY OF THE INVENTION

Thus, the present invention has been achieved to solve the aforementioned problems associated with the prior art, and it is an object of the invention to provide a network node apparatus that can identify easily the fault location in the optical path in the case where a fault occurs in a network, a network system using the network node apparatus, and its fault location detecting method.

According to an aspect of the present invention, there is provided a network node apparatus having an input terminal and an output terminal being each connected to a transmission line, which forms a bi-directional transmission path via this transmission line to another network node apparatus, comprising switching means for switching a signal sent out via the transmission path from another network node apparatus to be folded back and output to another network node apparatus again.

The network node apparatus may have means for demultiplexing a wavelength multiplexed signal entered from the transmission line, means for multiplexing the wavelength demultiplexed signal again by exchanging it into a predetermined route, and wavelength conversion means for converting the wavelength of the signal sent out from another network node apparatus into the wavelength of the wavelength demultiplexed signal.

The network node apparatus may comprise a test signal sending component for sending out a test signal into the transmission path in response to occurrence of a fault in the transmission line or another network node apparatus, in which the switching means switches the test signal sent out via the transmission path from another network node apparatus to be folded back and output to another network node apparatus, and the wavelength conversion means converts the wavelength of the test signal into the wavelength of signal on the transmission line where the fault has occurred.

Further, the network node apparatus may comprise determination means for determining the signal quality of the test signal by receiving it to effect transmission control over the test signal sending component in accordance with the determination result, in which the determination means comprises a test signal receiving component for receiving the test signal and a determination portion for determining the presence or absence of the fault by comparing the signal quality of the test signal received by the test signal receiving component with a predetermined value.

And the test signal sending component notifies the determination result of the determination portion to another network node apparatus, in which the test signal sending component transmits the test signal after notifying the determination result.

Also, the determination means measures at least one of BER (Bit Error Rate), S (Signal)/N (Noise) ratio, the power of the test signal, and the wavelength of the test signal as the signal quality.

According to another aspect of the invention, there is provided a network system comprising a transmission line and a network node apparatus having an input terminal and an output terminal being each connected to the transmission line, which forms a bi-directional transmission path via this transmission line to another network node apparatus, wherein the network node apparatus comprises switching means for switching a signal sent out via the transmission path from another network node apparatus to be folded back and output to another network node apparatus again.

The network node apparatus may have means for demultiplexing a wavelength multiplexed signal entered from the transmission line, means for multiplexing the wavelength demultiplexed signal again by exchanging it into a predetermined route, and wavelength conversion means for converting the wavelength of the signal sent out from another network node apparatus into the wavelength of the wavelength demultiplexed signal.

The network node apparatus may further comprise a test signal sending component for sending out a test signal to the transmission path in response to occurrence of a fault in the transmission line or another network node apparatus, in which the switching means switches the test signal sent out via the transmission path from another network node apparatus to be folded back and output to another network node apparatus.

Further, the network node apparatus may comprise determination means for determining the signal quality of the test signal by receiving it to effect transmission control over the test signal sending component in accordance with the determination result.

The network node apparatus may make the transparent transmission.

Moreover, according to another aspect of the invention, there is provided a fault location detecting method for a network system having a plurality of network nodes (hereinafter referred to as nodes) connected via a transmission line, comprising a step for sending out a test signal from a terminal node of the transmission line to a working transmission line after switching the working transmission line to an auxiliary transmission line in response to occurrence for a fault, a step for folding back the test signal to the terminal node in a node that has received the test signal, and a step for determining the signal quality of the test signal folded back to identify the fault location based on the determination result in the terminal node.

Also, according to another aspect of the invention, there is provided a fault location detecting method for a network system having a plurality of nodes connected via a transmission line, comprising a step for sending out a test signal from a terminal node of the transmission line to a working transmission line after switching the working transmission line to an auxiliary transmission line in response to occurrence of a fault, a step for sending out the determination result to the terminal node by determining the signal quality of the test signal in a node that has received the test signal, and a step for identifying the fault location based on the determination result in the terminal node that has received the determination result.

Also, according to another aspect of the invention, there is provided a fault location detecting method for a network system having a plurality of nodes connected via a transmission line, comprising a step for sending out a test signal from a terminal node of the transmission line to a working transmission line after switching the working transmission line to an auxiliary transmission line in response to occurrence of a fault, a step for sending out the determination result to the terminal node by determining the signal quality of the test signal in a node that has received the test signal, a step for identifying the fault location based on the determination result in the terminal node that has received the determination result, and a step for sending out the test signal from the node having sent out the determination result to the working transmission line if there is no fault detected during the operation of the identifying step.

The fault location detecting method may further comprise a step for extending the node for sending out the test signal by every one hop in succession from the node having sent out the determination result, in which the terminal node is a start node or an end node of the transmission line.

Moreover, according to another aspect of the invention, there is provided a fault location detecting method for a network system having a plurality of nodes connected via a transmission line, comprising a step for sending out a test signal from each of a start node and an end node of the transmission line to a node located in the center of a working transmission line after switching the working transmission line to an auxiliary transmission line in response to occurrence of a fault, a step for folding back the test signal to each of the start node and the end node in the node located in the center of the working transmission line that has received the test signal, a step for identifying the fault location based on the determination result by determining the signal quality of the test signal folded back at each of the start node and the end node, and a step for releasing the nodes outside a fault interval in the working transmission line to set up the other path, if there is any fault detected at either the start node or the end node during the operation of the identifying step.

Further, according to another aspect of the invention, there is provided a fault location detecting method for a network system having a plurality of nodes connected via a transmission line, having a step for sending out a test signal from each of a start node and an end node of the transmission line to a node located in the center of a working transmission line after switching the working transmission line to an auxiliary transmission line in response to occurrence of a fault, a step for determining the signal quality of the test signal in the node located in the center of the working transmission line that has received the test signal, and sending out the determination result to each of the start node and the end node, a step for identifying the fault location based on the determination result at each of the start node and the end node having received the determination result, and a step for releasing the nodes outside a fault interval in the working transmission line to set up the other path, if there is any fault detected at either the start node or the end node during the operation of the identifying step.

The fault location detecting method may further comprise a step for converting the wavelength of the test signal into the wavelength of signal on the transmission line where the fault has occurred in the node having received the test signal and then folding back the wavelength signal to the terminal node, in which the determination result is sent out using a channel that may or may not be different from the channel having received the test signal in the node that sent out the determination result to the terminal node, and a step for extending the node for folding back the test signal or determination result by every one hop in succession from the terminal node.

The fault location detecting method may further comprise a step for extending the node for folding back the test signal or determination result by every plural hops in succession from the terminal node, and a step for reducing the number of hops for extending the node in the fault interval, if there is any fault detected during the operation of the extending step.

Moreover, the fault location detecting method may further comprise a step for extending the node for folding back the test signal by every one hop in succession from the terminal node, and a step for folding back the test signal via the nodes outside the working transmission line, if there is any fault detected during the operation of the extending step.

And the determination of the signal quality of the test signal is made using at least one of BER, S/N ratio, the power of the test signal and the wavelength of the test signal.

The operation of the invention will be described below. If the optical path is switched to the auxiliary system due to a fault, an optical test signal sent out from the determination device for the network node apparatus at the end point of the optical path is looped back by another network node apparatus on the optical path for the working system, and received by the network node apparatus that has sent out the optical test signal. The optical test signal is converted into the electrical signal within the network node apparatus, and the signal quality is measured to detect the presence or absence of fault in the path through which the optical test signal is passed. If there is no abnormality on the measured result, the loop-back distance is extended in succession, and applied to another network node apparatus on the optical path for the working system. In a case of finding an interval in which the signal quality of the optical test signal is degraded or an interval in which the optical test signal can not be received, it is considered that a fault has occurred in the network node apparatus or the link within the interval. Thereby, the fault location as well as the degraded signal quality can be detected.

### BRIEF DESCRIPTION OF THE DRAWINGS

FIG. 1 is a diagram showing a configuration of an entire network comprising a plurality of transmission lines and a plurality of network node apparatuses according to an embodiment of the present invention;
FIG. 2 is a block diagram showing a configuration of a network comprising a plurality of network node apparatuses according to the embodiment of the invention (one-side loop-back method);
FIG. 3 is a block diagram showing an internal configuration of each of determination devices 11a to 11h as shown in FIG. 2;
FIG. 4 is a block diagram showing a configuration of a network comprising a plurality of network node apparatuses having a wavelength multiplexing function (one-side loop-back method);
FIG. 5 is a block diagram showing an internal configuration of each of the network node apparatuses 10a to 10h as shown in FIG. 4;
FIG. 6 is a flowchart showing a fault location detecting operation in FIGS. 2 and 4;
FIG. 7 is a block diagram showing a configuration of a network comprising a plurality of network node apparatuses having a wavelength multiplexing function (both-side loop-back method);
FIG. 8 is a table showing a relation between the trial number till detecting the fault location and the detected fault location in FIG. 7;
FIG. 9 is a flowchart showing a fault location detecting operation in FIG. 7;
FIG. 10 is a flowchart showing a fault location detecting operation in FIG. 7;
FIG. 11 is a block diagram showing a configuration of a network in the case where a network node apparatus not existent on the working system path is further added in FIG. 4 (one-side loop-back method);
FIG. 12 is a table showing a relation between the fault location check and the detected fault location in FIG. 11;
FIG. 13 is a flowchart showing a fault location detecting operation as shown in FIG. 11;
FIG. 14 is a block diagram showing a configuration of a network comprising a plurality of network node apparatuses according to another embodiment of the invention (control channel response signal method);
FIG. 15 is a block diagram showing an internal configuration of each of the network node apparatuses 20a to 20h as shown in FIGS. 14 and 16;
FIG. 16 is a block diagram showing a configuration of a network comprising a plurality of network node apparatuses according to a further embodiment of the invention (data channel response signal method);
FIG. 17 is a table showing a relation between a trial number till detecting the fault location and the detected fault location in FIGS. 14 and 16;
FIG. 18 is a flowchart showing a fault location detecting operation in FIGS. 14 and 16;
FIG. 19 is a flowchart showing a fault location detecting operation in FIGS. 14 and 16;
FIG. 20 is a block diagram showing a configuration of a network comprising a plurality of network node apparatuses according to a still further embodiment of the invention;
FIG. 21 is a table showing a relation between the trial number till detecting the fault location and the detected fault location in FIG. 20;
FIG. 22 is a block diagram showing the operation when the fault location check is made for every plural hops in FIG. 2;
FIG. 23 is a block diagram showing a configuration of a network comprising a plurality of network node apparatuses according to another embodiment of the invention;
FIG. 24 is a block diagram showing another configuration of the determination device;
FIG. 25 is a block diagram showing a further configuration of the determination device;
FIG. 26 is a block diagram showing a configuration of a conventional network of path route switching system;
FIG. 27 is a block diagram showing a configuration of a conventional transparent optical network; and
FIG. 28 is a block diagram showing a configuration of a network node apparatus having monitoring devices.

### DESCRIPTION OF THE PREFERRED EMBODIMENTS

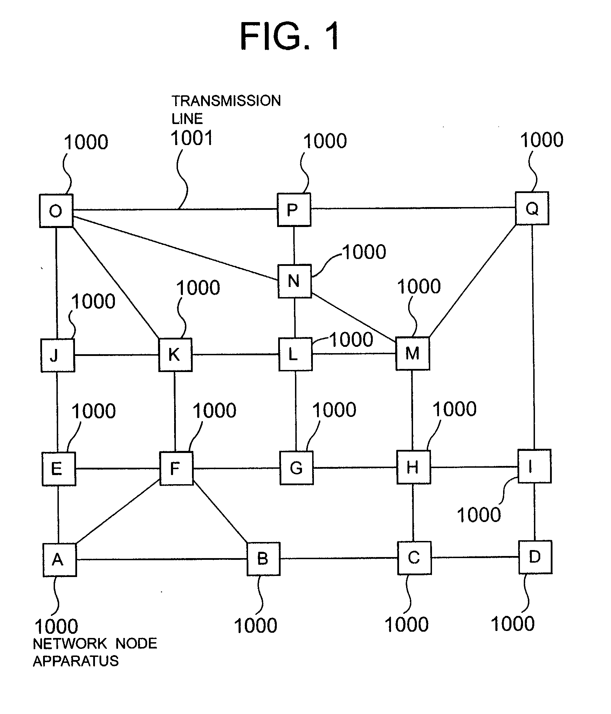

The preferred embodiments of the present invention will be described below with reference to the accompanying drawings. FIG. 1 is a diagram showing the configuration of an entire network according to an embodiment of the invention. In FIG. 1, reference numeral 1000 denotes each network node apparatus, an input terminal and an output terminal of each of a plurality of network node apparatuses A to Q being connected to respective ones of a plurality of transmission lines 1001.

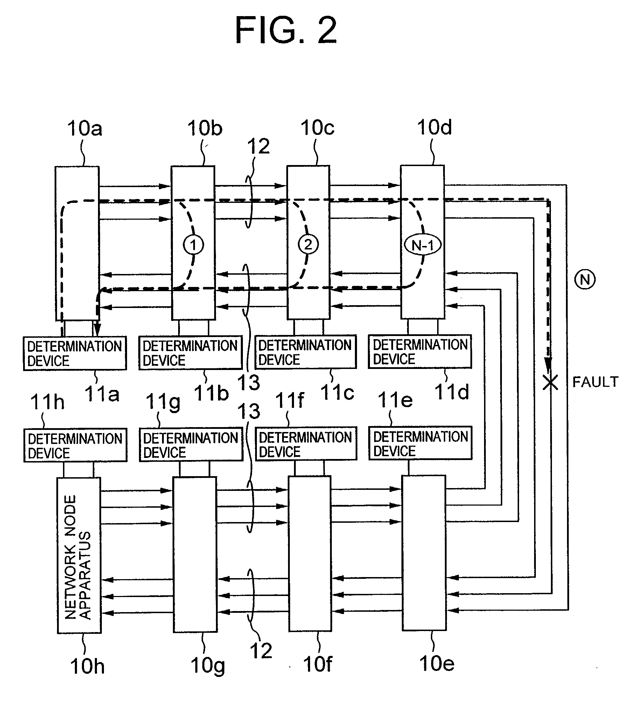

The network comprising a plurality of network node apparatuses will be described below. FIG. 2 is a block diagram showing the configuration of the network comprising the plurality of network node apparatuses, and showing a part of the entire network of FIG. 1. In FIG. 2, the network of the invention is composed of the transparent network node apparatuses 10a to 10h on an optical path for the working system (current optical path), the determination devices 11a to 11h, and a plurality of transmission lines 12 and 13 laid for the bi-directional communication through a link from the network node apparatus 10a to the network node apparatus 10h and a link from the network node apparatus 10h to the network node apparatus 10a. The signal on the plurality of transmission lines 12 and 13 is optical but may be electrical.

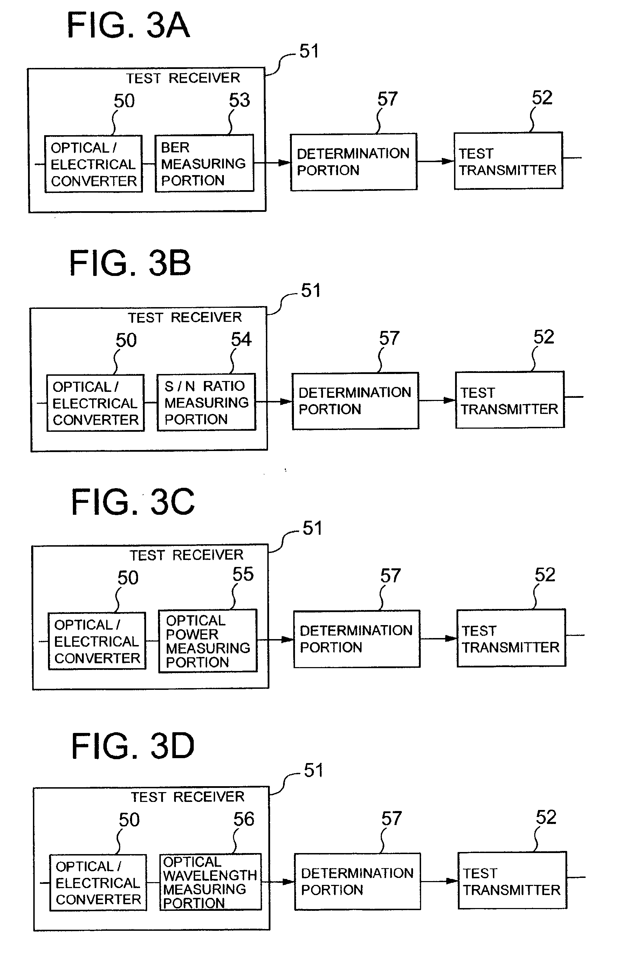

FIGS. 3A to 3D are block diagrams showing the internal configuration of each of the determination devices 11a to 11h as shown in FIG. 2. In FIGS. 3A to 3D, each of the determination devices 11a to 11h is composed of a test receiver 51, a test transmitter 52, and a determination portion 57. Moreover, the test receiver 51 is composed of an optical/electrical converter 50 and a BER (Bit Error Rate) measuring portion 53 in FIG. 3A, an optical/electrical converter 50 and an S (Signal) / N (Noise) ratio measuring portion 54 in FIG. 3B, an optical/electrical converter 50 and an optical power measuring portion 55 in FIG. 3C, or an optical/electrical converter 50 and an optical wavelength measuring portion 56 in FIG. 3D. Each of the determination devices 11a to 11h is configured in any one or a combination of FIGS. 3A to 3D.

Referring to FIG. 3, the fault location detecting operation in the optical network as shown in FIG. 2 will be described below. The fault location detecting method of FIG. 2 involves checking the fault location employing a loop-back method. In the transparent network, the working system path (current path) is firstly switched to the auxiliary system path (stand-by path) in the network node apparatuses at both ends of the transmission path, if a fault occurs at any location on the working transmission path.

Thereafter, the switch setting (not shown) for the network node apparatus 10b is changed to set up a path for looping back from the network node apparatus 10a through the network node apparatus 10b to the network node apparatus 10a (path as indicated by the dotted line ① in FIG. 2) along the working system path where the fault has occurred. This switch control within the network node apparatus 10b is made by sending a command from the network node apparatus 10a via a control channel to the network node apparatus 10b.

And the test transmitter 52 for the determination device 11a in the network node apparatus 10a originates an optical test signal to the network node apparatus 10b. The test receiver 51 for the determination device 11a receives the optical test signal looped back via the network node apparatus 10b to the network node apparatus 10a. The test receiver 51 measures the BER, S/N ratio, optical power or optical wavelength of the received optical signal and transmits the measured result to the determination portion 57. Referring to FIGS. 3A to 3D, a method by which the determination portion 57 determines the signal quality of the optical test signal received by the test receiver 51 will be described below.

### (a) BER:

The received optical test signal is converted into an electrical signal employing the optical/electrical converter 50, and the electrical signal is measured by the BER measuring portion 53. The determination portion 57 determines that the fault has occurred if the measured result is greater than a predetermined value, or determines that there is no abnormality if it is within the predetermined value. In general, the predetermined value is set to the minus 9-th power of 10, and the determination portion 57 determines no abnormality if the measured result is within this predetermined value, or the occurrence of fault if it is beyond the predetermined value.

### (b) S/N ratio:

The received optical test signal is converted into an electrical signal employing the optical/electrical converter 50, and the electrical signal is measured by the S/N ratio measuring portion 54. The determination portion 57 determines that there is no abnormality if the measured result is greater than or equal to a predetermined value, or determines that a fault has occurred if it is below the predetermined value.

### (c) Optical power:

The received optical test signal is converted into an electrical signal employing the optical/electrical converter 50, and the electrical signal is measured by the optical power measuring portion 55. The determination portion 57 determines that there is no abnormality if the measured result is greater than or equal to a predetermined value, or determines that the fault has occurred if it is below the predetermined value.

### (d) Optical wavelength:

The received optical test signal is converted into an electrical signal employing the optical/electrical converter 50, and the electrical signal is measured by the optical wavelength measuring portion 56. A difference between the measured result and a reference wavelength is calculated, and the determination portion 57 determines that there is no abnormality if the difference is within a predetermined value, or determines that the fault has occurred if it is beyond the predetermined value.

The determination portion 57 determines the presence or absence of any fault in the link between the network node apparatuses 10a and 10b or the network node apparatus 10b in accordance with a procedure of any one or combination of methods (a) to (d). If there is no fault, the switch setting within the network node apparatus 10b is restored, and the switch within the next network node apparatus 10c is set to pass the optical test signal through the network node apparatuses in the order of 10a to 10b to 10c to 10b to 10a (path of the dotted line ② in FIG. 2).

And the test transmitter 52 of the determination device 11a in the network node apparatus 10a originates an optical test signal to the network node apparatus 10c. The test receiver 51 of the determination device 11a receives the optical test signal looped back via the network node apparatus 10c, and the determination portion 57 makes a determination. The above operation is repeated in the same manner while extending the loop-back distance between the network node apparatuses by every one hop. Thereby, it is determined whether or not there is any fault in the link or the network node apparatus.

Next, an instance where the optical test signal is not returned to the network node apparatus 10a in the N-th above operation will be discussed below. In FIG. 2, if the N-th optical test signal is not returned to the network node apparatus 10a due to a fault between the network node apparatuses 10d and 10e (a path of the dotted line N in FIG. 2), or the determination portion 57 determines that a fault has occurred, the possibility of fault occurrence may be in the bi-directional link between the network node apparatuses 10d and 10e, or the network node apparatus 10e. In this manner, it is possible to identify the range where the fault occurs in the transparent network.

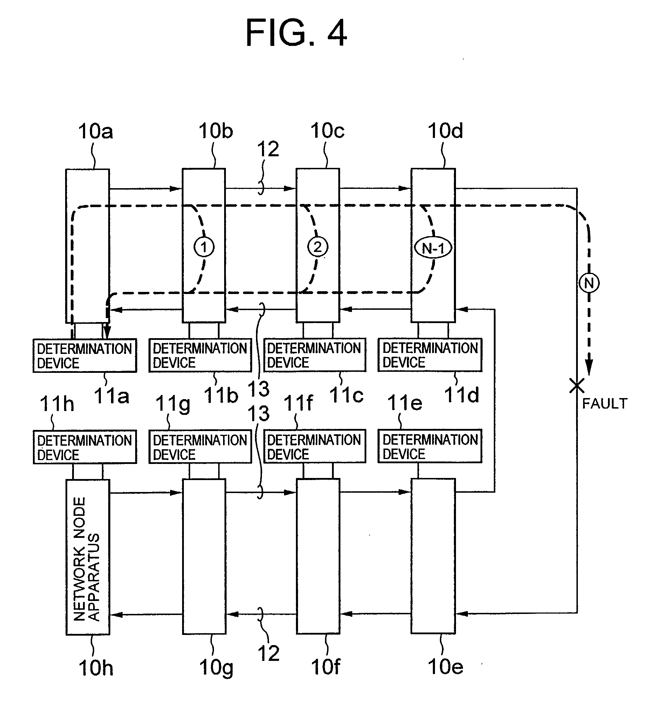

FIG. 4 is a block diagram showing a configuration of a network comprising a plurality of network node apparatuses having a wavelength multiplexing function. In FIG. 4, reference numerals 12 and 13 denote two transmission lines laid for the bi-directional communication through a link from the network node apparatus 10a to 10h and a link from the network node apparatus 10h to 10a. The other like parts are designated by the same numerals in FIGS. 2 and 4. The signal on the two transmission lines 12 and 13 is a wavelength multiplexed optical signal. The fault location detecting method of FIG. 4 is a fault location check based on the loop-back method as in FIG. 2. Also, the internal configuration of each of the determination devices 11a to 11h is the same as that shown in FIGS. 3A to 3D.

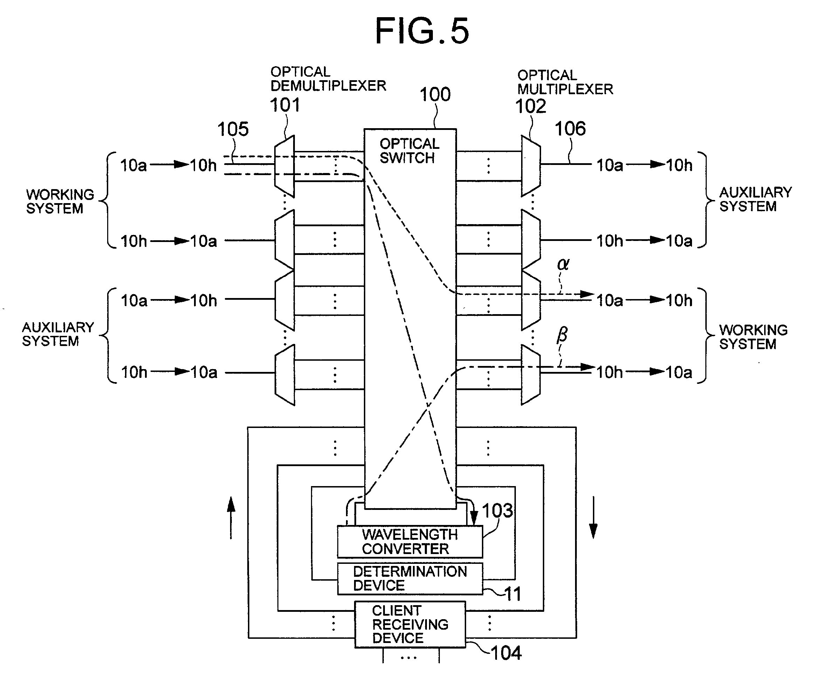

FIG. 5 is a block diagram showing an internal configuration of each of the network node apparatuses 10a to 10h as shown in FIG. 4. In FIG. 5, each of the network node apparatuses 10a to 10h comprises an optical switch 100, a optical demultiplexer 101 for demultiplexing a wavelength multiplexed optical signal input from an input fiber 105, a optical multiplexer 102 for multiplexing demultiplexed optical signals into wavelength multiplexed optical signal to be output from an output fiber 106, a wavelength converter 103 connected to the optical switch 100, a determination device 11, and a client receiving device 104. And the route of the optical signal for the working system from the network node apparatus 10a to 10h is switched in a direction of α as indicated by the arrow of dotted line by the optical switch 100. The determination device 11 is the same as the determination devices 11a to 11h in FIG. 4.

The fault location detecting operation in the network as shown in FIG. 4 will be discussed below. After a fault occurs and the working system path is switched to the auxiliary system path, the optical switch 100 for the network node apparatus 10b is changed to set up a path for looping back from the network node apparatus 10a through the network node apparatus 10b to the network node apparatus 10a (path as indicated by the dotted line ① in FIG. 4) along the working system path where the fault has occurred.

And the test transmitter 52 for the determination device 11a in the network node apparatus 10a originates an optical test signal to the network node apparatus 10b. The test receiver 51 for the determination device 11a receives the optical test signal looped back via the network node apparatus 10b to the network node apparatus 10a. The test receiver 51 measures the BER, S/N ratio, optical power or optical wavelength of the received optical signal and transmits the measured result to the determination portion 57.

The determination portion 57 determines the presence or absence of any fault in the link between the network node apparatuses 10a and 10b or the network node apparatus 10b in accordance with the same procedures as the above determination methods (a) to (d). The above operation is repeated in the same manner while extending the loop-back distance between the network node apparatuses by every one hop. Thereby, it is determined whether or not there is any fault in the link or the network node apparatus.

By the way, since an optical signal passed from the network node apparatus 10a to 10b used in the working system and an optical signal passed from the network node apparatus 10b to 10a may have different wavelengths, it is required to convert the wavelength of the optical test signal passed from the network node apparatus 10b to 10a into the wavelength of the optical signal passed from the network node apparatus 10b to 10a used in the working system in looping back the optical test signal in the network node apparatus 10b as the fault location check. That is, in FIG. 5, the route of the optical test signal is changed in a direction of β as indicated by the arrow of dashed line by the optical switch 100, and the wavelength is converted by the wavelength converter 103. Then, the optical signal is looped back to the optical path for the working system from the network node apparatus 10b to 10a.

Turning back to FIG. 4, an instance where the optical test signal is not returned to the network node apparatus 10a in the above N-th operation will be discussed below. In FIG. 4, in a case where the N-th optical test signal is not returned to the network node apparatus 10a due to a fault between the network node apparatuses 10d and 10e (a path of the dotted line N in FIG. 4), or the determination portion 57 determines that a fault has occurred, the possibility of fault occurrence may be in the bi-directional link between the network node apparatuses 10d and 10e, or the network node apparatus 10e. In this manner, it is possible to identify the range where the fault occurs in the transparent optical network.

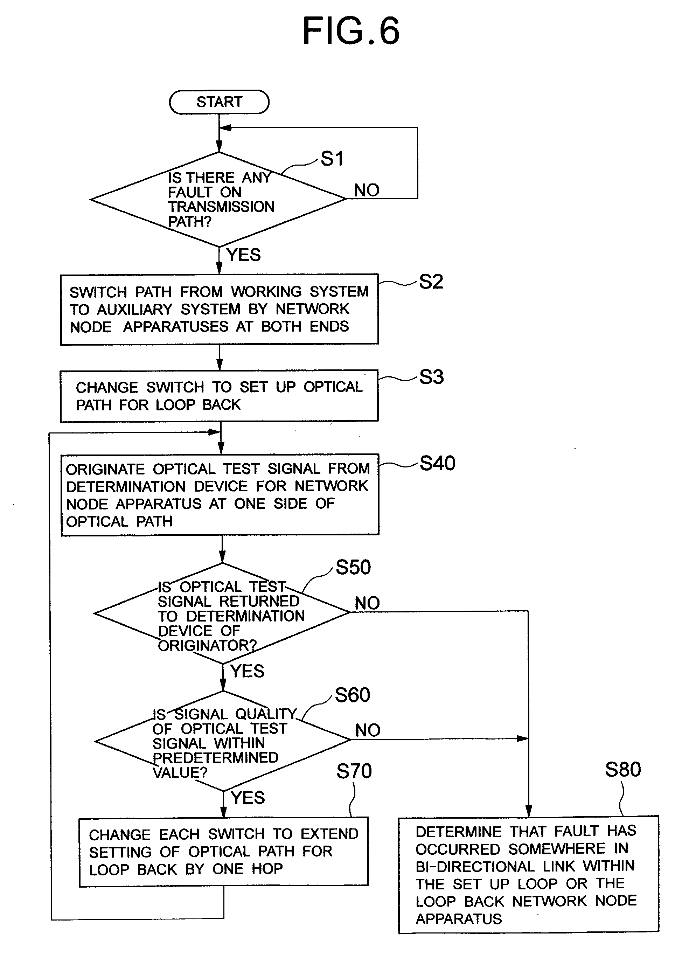

The fault location detecting operation as shown in FIGS. 2 and 4 will be briefly set forth, using a flowchart of FIG. 6. At step (hereinafter denoted as S) 1, it is determined whether or not any fault occurs in the transmission path for the working system. If the fault occurs (S1: Y), the working system path is switched to the auxiliary system path by the network node apparatuses at both ends of the transmission path at S2. At S3, the optical switch 100 within the network node apparatus is changed to set up an optical path for loop-back. At S40, the determination device for the network node apparatus at one side of the optical path originates an optical test signal.

At S50, it is determined whether or not the optical test signal is returned to the determination device. If the optical test signal is returned (S50: Y), it is determined whether or not the signal quality of optical test signal is within a predetermined value (S60). If the optical test signal is not returned (S50: N), or the signal quality of optical test signal is not within the predetermined value (S60: N), it is determined at S80 that a fault has occurred at any location in the bi-directional link within the set-up loop, or the loop-back network node apparatus.

If the signal quality of optical test signal is within the predetermined value (S60: Y), it is determined that there is no fault in the bi-directional link within the set-up loop, or the loop-back network node apparatus. Then, at S70, the optical switch 100 is changed to extend the setting of the optical path for loop-back by one hop. Then, the processing at S40 is performed again.

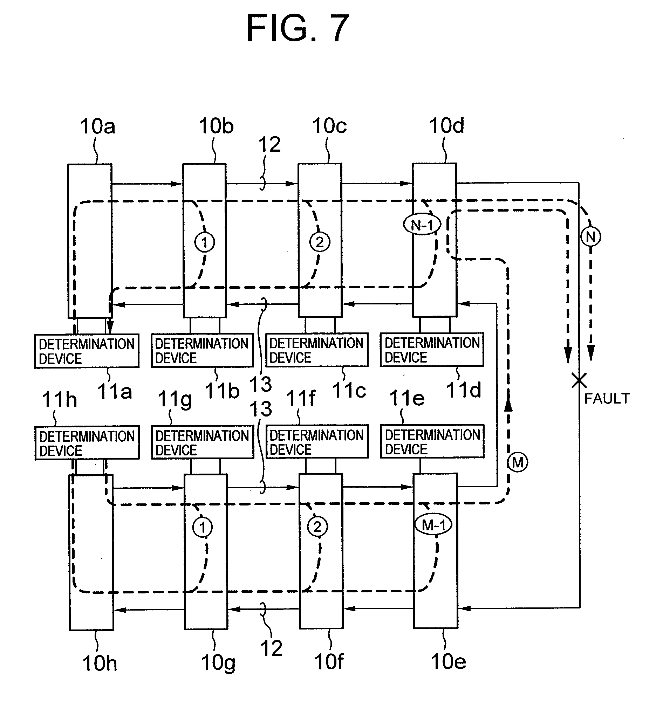

FIG. 7 is a block diagram showing a configuration of a network comprising a plurality of network node apparatuses having a wavelength multiplexing function. The other like parts are designated by the same numerals in FIGS. 4 and 7. The fault location detecting method of FIG. 7 involves a fault location check by the loop back, but is different from that of FIG. 4 in that the loop back is started not from the network node apparatus at one side, but from the network node apparatuses at both ends as the fault location check. The internal configuration of each of the network node apparatuses 10a to 10h and the internal configuration of each of the determination devices 11a to 11h are the same as those shown in FIG. 5 and FIGS. 3A to 3D.

The fault location detecting operation in the network as shown in FIG. 7 will be discussed below. After a fault occurs and the working system path is switched to the auxiliary system path, the optical switches 100 within the network node apparatuses 10b and 10g are changed to set up optical paths for looping back from the network node apparatuses 10a and 10h at both ends of the working system path through the network node apparatuses 10b and 10g to the network node apparatuses 10a and 10h (paths as indicated by the dotted lines ① in FIG. 7) along the working system path where the fault has occurred.

And the test transmitter 52 for the determination device 11a, 11h in the network node apparatus 10a, 10h originates an optical test signal to the network node apparatus 10b, 10g. The test receiver 51 for the determination device 11a, 11h receives the optical test signal looped back via the network node apparatus 10b, 10g to the network node apparatus 10a, 10h. The test receiver 51 measures the BER, S/N ratio, optical power or optical wavelength of the received optical signal and transmits the measured result to the determination portion 57. The determination portion 57 for the determination device 11a determines the presence or absence of any fault in the link between the network node apparatuses 10a and 10b or the network node apparatus 10b in accordance with the same procedures as the above determination methods (a) to (d). The determination portion 57 for the determination device 11h determines the presence or absence of any fault in the link between the network node apparatuses 10h and 10g or the network node apparatus 10g in accordance with the same procedures as the above methods (a) to (d). The above operation is repeated in the same manner while extending the loop-back distance between the network node apparatuses by every one hop. Thereby, it is determined whether or not there is any fault in the links or the network node apparatuses.

In the same way as in FIG. 4, the route of the optical test signal is changed by the optical switch 100 in each of the network node apparatuses 10b and 10g, and the wavelength is converted by the wavelength converter 103. Then, the optical signal converted by the converter 103 in the network node apparatus 10b is looped back to the working system path from the network node apparatus 10b to 10a , and the optical signal converted by the converter 103 in the network node apparatus 10g is looped back to the working system path from the network node apparatus 10g to 10h.

In FIG. 7, assuming that the trial numbers of fault location checks that are performed till the fault location is found from the network node apparatuses at both ends are M and N (M and N are natural numbers), respectively, and the number of hops for the network is (N+M-1), the procedure for identifying the fault location minutely will be set forth. In FIG. 7, in a case where the N-th optical test signal is not returned to the network node apparatus 10a due to a fault between the network node apparatuses 10d and 10e (a path of the dotted line N in FIG. 7), or the determination portion 57 determines that a fault has occurred, the possibility of fault occurrence may be in the bi-directional link between the network node apparatuses 10d and 10e, or a network node apparatus 10e.

On one hand, the optical test signal originated from the test transmitter 52 of the determination device 11h is received by the test receiver 51 of the determination device 11h to continue the loop back. In a case where the M-th optical test signal is not returned to the network node apparatus 10h (a path of the dotted line M in FIG. 7), or the determination portion 57 determines that a fault has occurred, it will be found that no fault occurs in the network node apparatus 10e, because the M-1-th optical test signal passes through the network node apparatus 10e to the network node apparatus 10h (a path of the dotted line M-1 in FIG. 7). Thereby, the fault location can be identified somewhere in the bi-directional link between the network node apparatuses 10d and 10e.

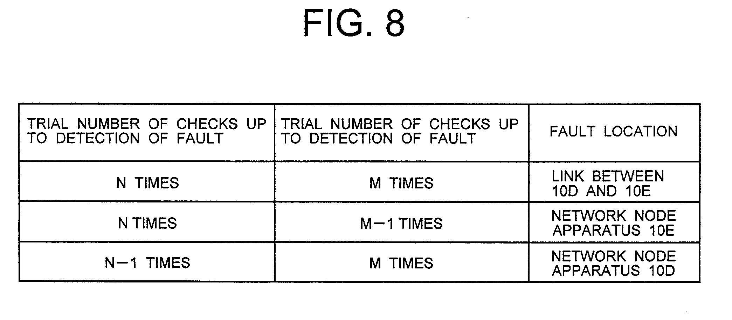

In a case where the M-1-th optical test signal is not returned due to fault, or the determination portion 57 determines the fault occurrence, the fault location can be identified as the network node apparatus 10e. In the transparent optical network, it is possible to identify the range where the fault occurs in accordance with the above procedure. The relation between the trial number of fault location checks and the detected fault location in such case is shown in FIG. 8. In this manner, the fault location can be identified more promptly and minutely by starting the loop back not from the network node apparatus at one side but from the network node apparatuses at both ends.

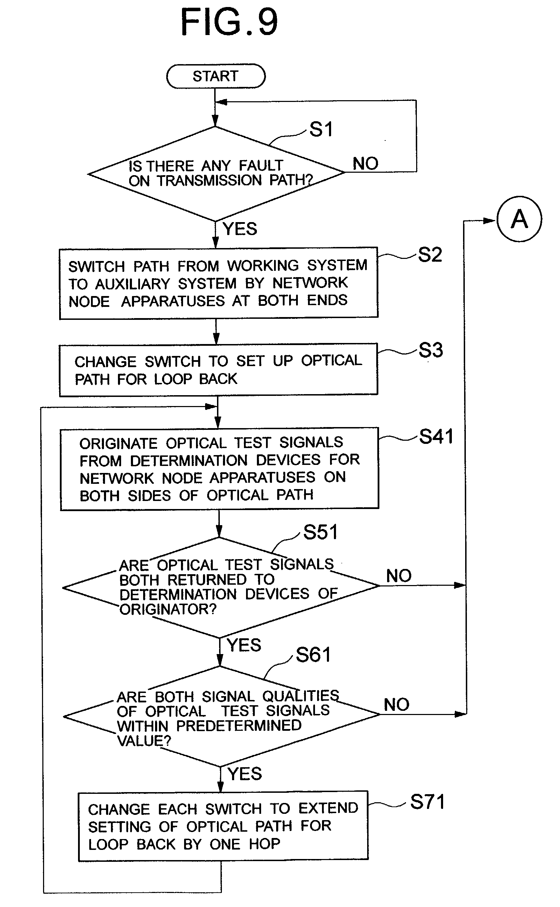

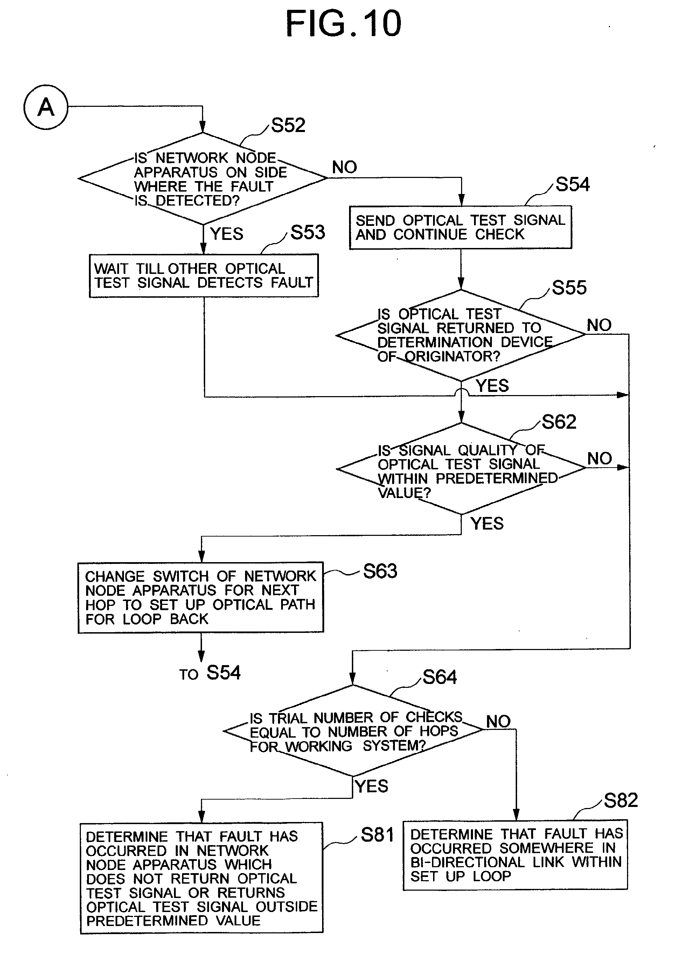

The fault location detecting operation as shown in FIG. 7 will be briefly set forth, using flowcharts of FIGS. 9 and 10. The processings at S1, S2 and S3 are fundamentally the same as those in FIG. 6, except that in the processings at S2 and S3, the transmission path is switched by the network node apparatuses at both ends to change the optical switches 100 for the network node apparatuses connected to the network node apparatuses at both ends.

At S41, the optical test signals are originated from the determination devices of the network node apparatuses at both ends. At S51, it is determined whether or not both the optical test signals are returned to the determination devices of originators. If both the optical test signals are returned (S51: Y), it is determined at S61 whether or not both the optical test signals are within a predetermined value. If both the optical test signals are within the predetermined value (S61: Y), the optical switches 100 are changed to extend the optical path setting for loop back by one hop at S71. Then, the processing at S41 is performed again.

If both the optical test signals are not returned to the determination devices of originators (S51: N), or the signal qualities of both the optical test signals are not within the predetermined value (S61: N), the procedure transfers to S52. At S52, it is determined whether or not the negative result of S51 or S61 is the network node apparatus on the side where the fault is detected. That is, checks are performed, beginning with the network node apparatuses at both ends. In a case where any fault is detected in the check for one side and the check for one side is ended (S52: Y), the procedure waits till the fault is detected in the other check (S53). If no fault is detected in the other check (S52: N), an optical test signal is transmitted at S54, and the check is continued.

In the processings at S55 and S62, it is determined whether or not the optical test signal is returned to the determination device of originator, or whether or not the signal quality of the optical test signal is within the predetermined value. If the optical test signal is returned to the determination device of originator (S55: Y), and the signal quality of the optical test signal is within the predetermined value (S62: Y), it follows that there is no fault detected through the loop on the side of continuing the check at S54. Therefore, at S63, the optical switch 100 for the next hop is changed to set up the optical path for loop back. Then, the processing at S54 is performed again.

If the optical test signal is not returned to the determination device of originator on the side where the check is continued (S55: N), or the signal quality of the optical test signal is not within the predetermined value (S62: N), while waiting till the fault is detected in the other check at S53, the procedure transfers to S64. At S64, it is determined whether or not the total trial number of checks from both ends is equal to the number of hops for the working system. If the trial number of checks is equal to the number of hops (S64: Y), it is determined that the fault occurs in the network node apparatus which does not return the optical test signal to the originator, or returns the optical test signal outside the predetermined value to the originator (S81). On the other hand, if the trial number of checks is different from the number of hops (S64: N), it is determined that the fault occurs somewhere in the bi-directional link within the set-up loop (S82).

That is, in the case where the checks are performed beginning with the network node apparatuses at both ends, the check on one side is ended but the check on the other side is continued. Hence, after the check on the other side is ended, the fault location is identified by referring to both the results.

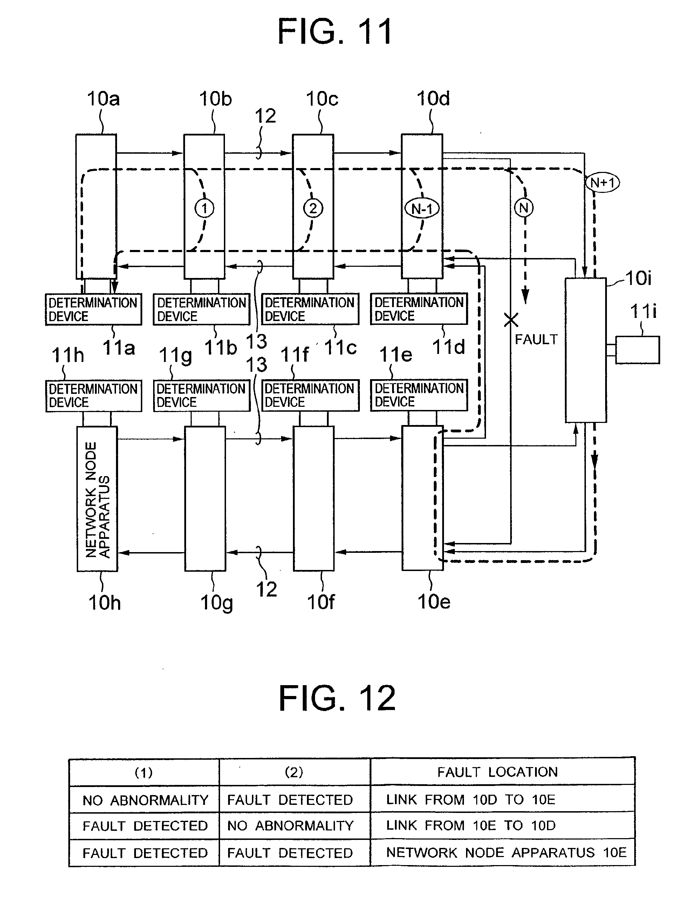

A network comprising a plurality of network node apparatuses according to another embodiment of the invention will be described below. FIG. 11 is a block diagram showing the operation of making the fault location check by the loop back method, using the network node apparatus not present on the working system path. In FIG. 11, reference numeral 10i denotes a transparent network node apparatus not present on the working system path, which is connected via the link to the network node apparatuses 10d and 10e. Reference numeral 11i denotes a determination device for the network node apparatus 10i. The other like parts are designated by the same numerals in FIGS. 4 and 11. Moreover, the internal configuration of the network node apparatuses 10a to 10i and the internal configuration of the determination devices 11a to 11i are the same as those shown in FIG. 5 and FIGS. 3A to 3D.

The fault location detecting operation in the network as shown in FIG. 11 will be discussed below. After a fault occurs and the working system path is switched to the auxiliary system path, the optical switch 100 within the network node apparatus 10b is changed to set up an optical path for looping back from the network node apparatus 10a at end point of the path through the network node apparatus 10b to the network node apparatus 10a (path as indicated by the dotted line ① in FIG. 11) along the working system path where the fault has occurred.

And the test transmitter 52 for the determination device 11a in the network node apparatus 10a originates an optical test signal to the network node apparatus 10b. The test receiver 51 for the determination device 11a receives the optical test signal looped back via the network node apparatus 10b to the network node apparatus 10a. The test receiver 51 measures the BER, S/N ratio, optical power or optical wavelength of the received optical signal and transmits the measured result to the determination portion 57. The determination portion 57 determines the presence or absence of any fault in the link between the network node apparatuses 10a and 10b, or the network node apparatus 10b in accordance with the same procedures of the above determination methods (a) to (d).

In the same way as in FIG. 4, the route of the optical test signal is changed by the optical switch 100 in the network node apparatus 10b, and the wavelength is converted by the wavelength converter 103. Then, the optical signal is looped back to the working system path from the network node apparatus 10b to 10a. The above operation is repeated in the same manner while extending the loop-back distance between the network node apparatuses by every one hop. Thereby, it is determined whether or not there is any fault in the link or the network node apparatus.

Next, an instance where the optical test signal is not returned to the network node apparatus 10a in the above N-th operation will be discussed below. In FIG. 11, in a case where the N-th optical test signal is not returned to the network node apparatus 10a due to a fault between the network node apparatuses 10d and 10e (a path of the dotted line N in FIG. 11), the possibility of fault occurrence may be somewhere in the bi-directional link between the network node apparatuses 10d and 10e, or a network node apparatus 10e.

Herein, the following two fault location checks are tried, employing the network node apparatus 10i not present on the working system path, which is directly connected to the network node apparatuses 10d and 10e, to identify the fault location minutely (a path as indicated by the dotted line N+1 in FIG. 11).
(1) The optical switches 100 within the network node apparatus 10d, 10e, 10i are set up so that the flow of optical test signal may be in the sequence of 10a - .. - 10d - 10i - 10e - 10d - .. - 10a. The test transmitter 52 for the determination device 11a transmits an optical test signal to the loop back path.
(2) The optical switches 100 within the network node apparatus 10d, 10e, 10i are set up so that the flow of optical test signal may be in the sequence of 10a - .. - 10d - 10e - 10i - 10d - .. - 10a. The test transmitter 52 for the determination device 11a transmits an optical test signal to the loop back path.
The fault location is detected from the trial results of the two fault location checks, as shown in FIG. 12. With the above procedure, it is possible to identify the range where the fault occurs in the transparent optical network. Moreover, owing to the use of the network node apparatus not present on the working system path, the fault location can be identified more minutely than in the embodiment of FIG. 4.

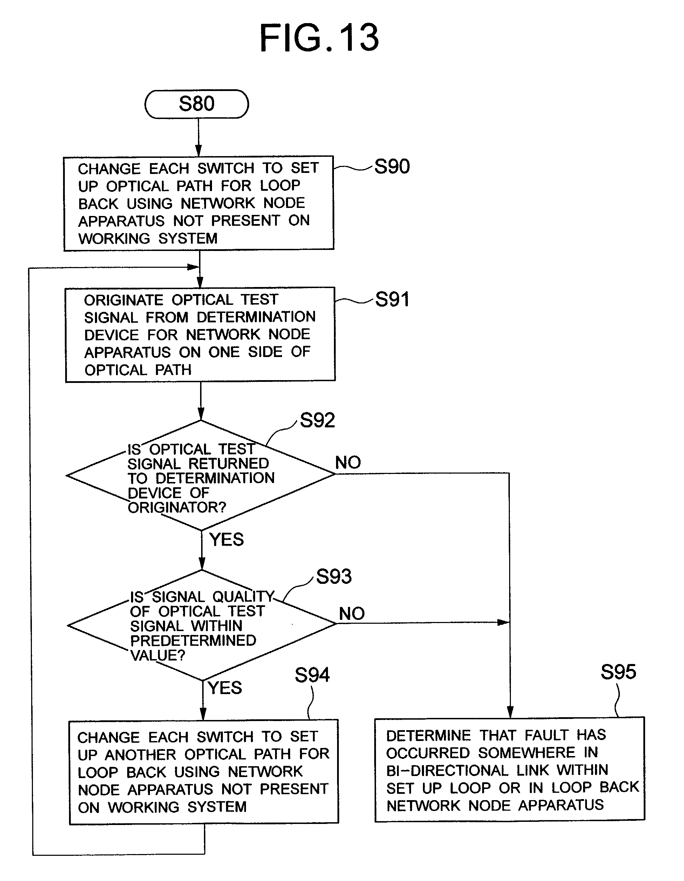

The fault location detecting operation as shown in FIG. 11 will be briefly set forth, using a flowchart of FIG. 13. In this case, since the fault location check is made more minutely than that by one side loop back as shown in FIG. 6, the fault location check using the network node apparatus not present on the working system path is performed after the end of the check by one side loop back. In FIG. 13, after the processing at S80 in FIG. 6 is ended, each of the optical switches 100 is changed to set up the optical path for loop back using the network node apparatus not present on the working system path in the processing at S90.

At S91, the determination device for the network node apparatus at one side of the optical path originates an optical test signal. At S92, it is determined whether or not the optical test signal is returned to the determination device of originator. If the optical test signal is returned (S92: Y), it is determined whether or not the signal quality of the optical test signal is within a predetermined value at S93. If the signal quality of the optical test signal is within the predetermined value (S93: Y), each of the optical switches 100 is changed to set up another optical path for loop back using the network node apparatus not present on the working system at S94. Then the processing at S91 is performed again.

If the optical test signal is not returned (S92: N), or the signal quality of the optical test signal is not within the predetermined value (S93: N), it is determined at S95 that the fault has occurred somewhere in the bi-directional link within the set-up loop or the loop back network node apparatus.

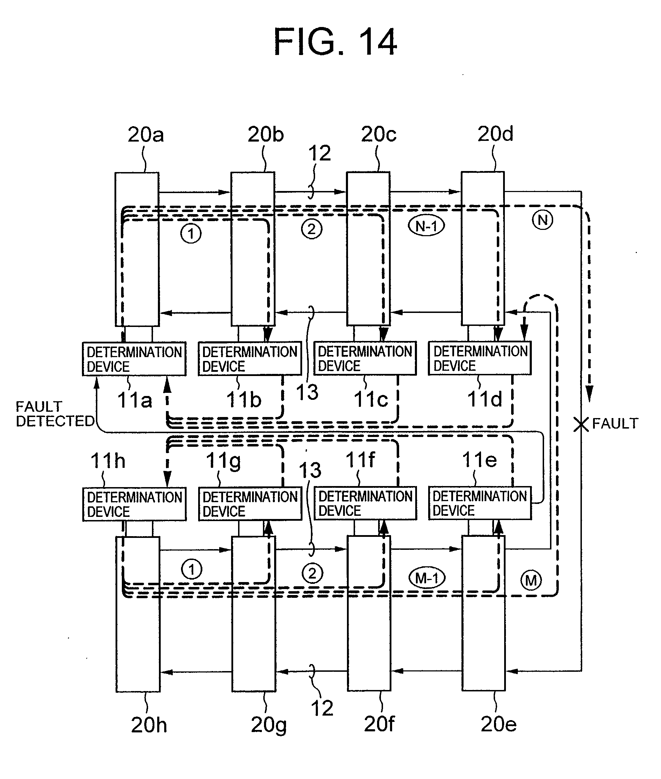

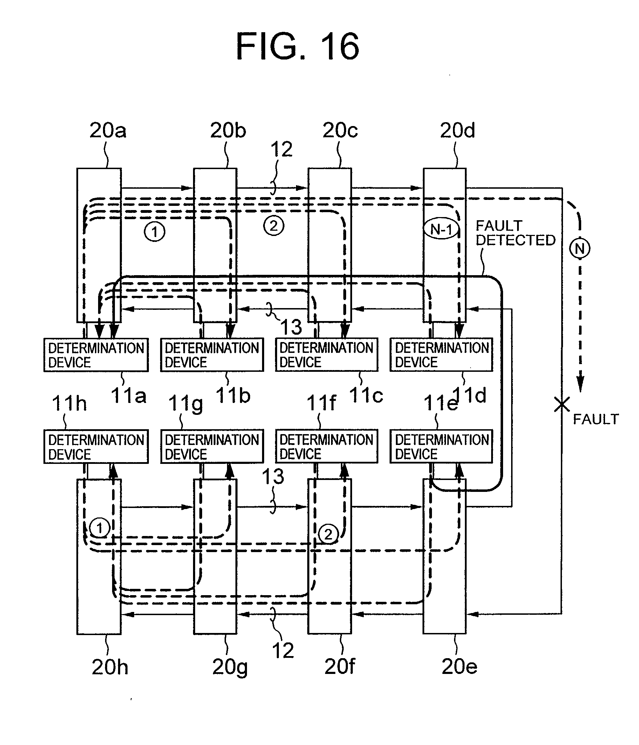

A network comprising a plurality of network node apparatuses according to a further embodiment of the invention will be described below. FIGS. 14 and 16 are block diagrams showing the operation of making the fault location check by the method in which the network node apparatus having received the optical test signal sends out a response signal to the determination device of transmission source. In FIGS. 14 and 16, the network of the invention is composed of transparent network node apparatuses 20a to 20h on an optical path for the working system, and two transmission paths 12 and 13 laid for the bi-directional communication through a link from the network node apparatus 20a to the network node apparatus 20h, and a link from the network node apparatus 20h to the network node apparatus 20a. The other like parts are designated by the same numerals in FIGS. 4, 14 and 16. The internal configuration of each of the determination devices 11a to 11h is the same as that shown in FIGS. 3A to 3D. A different point from FIG. 7 is that the optical test signal is terminated within the network node apparatus that has received the optical test signal, and the BER, S/N ratio, the optical power, or the optical wavelength of the optical test signal is measured.

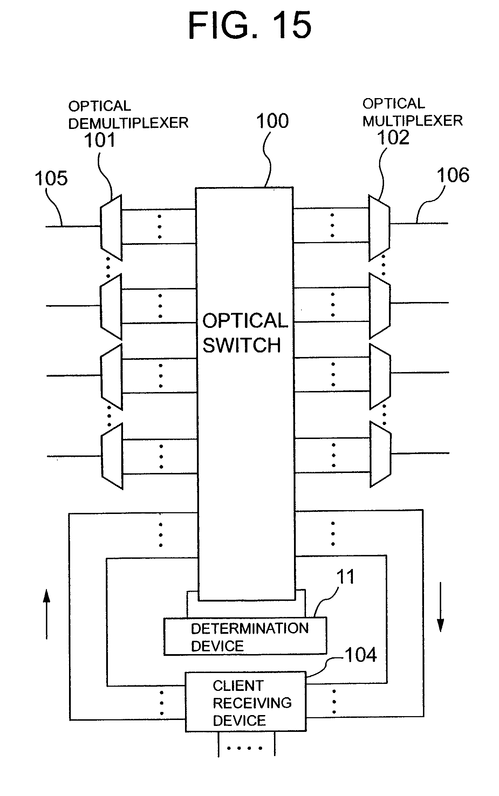

FIG. 15 is a block diagram showing the internal configuration of each of the network node apparatuses 20a to 20h as shown in FIGS. 14 and 16. The other like parts are designated by the same numerals in FIGS. 5 and 15. The determination device 11 is the same as the determination device 11a to 11h of FIGS. 14 and 16. A different point from FIG. 5 is that since the optical test signal is not folded back within the network node apparatus, there is no need of providing the wavelength converter 103 within each network node apparatus.

In FIGS. 14 and 16, when performing the fault location detection, an optical test signal is received, and a response signal is sent out, in which there are two sorts of route for sending out this response signal. Namely, there are two cases of using a channel (through which a control signal flows) different from a channel through which the optical test signal is transmitted as shown in FIG. 14 and using a channel (through which a principal signal flows) identical to the channel through which the optical test signal is transmitted as shown in FIG. 16, in which any of two cases may be employed. Specifically, these channels correspond to a control channel and a data channel.

Since the control lines are connected in parallel between the network node apparatuses, it is considered that a response signal is normally returned through the control line, when a fault occurs in the data channel in a return direction of the test signal in the case of FIG. 14. Therefore, the fault location check must be started from the network node apparatuses at both ends. In the case of FIG. 16, it is also possible to perform the fault location check from the network node apparatus at one end.

The fault location detecting operation in the network as shown in FIGS. 14 and 16 will be discussed below. After a fault occurs and the working system path is switched to the auxiliary system path, the test transmitters 52 of the determination devices 11a and 11h in the network node apparatuses 20a and 20h at both end points of the working system path originate optical test signals to the network node apparatuses 20b and 20g, respectively (path as indicated by the dotted line ① in FIGS. 14 and 16) along the working system path where the fault has occurred. These optical test signals are received by the determination devices 11b, 11g in the network node apparatuses 20b, 20g, respectively. The test receiver 51 of the determination device 11b, 11g measures the BER, S/N ratio, the optical power or optical wavelength of the received optical signal and transmits the measured result to the determination portion 57.

The determination portion 57 of the determination device 11b, 11g determines the presence or absence of any fault in the link or the network node apparatus in accordance with the same procedure as the above determination methods (a) to (d). If the result of determination is not abnormal, the test transmitter 52 within the determination device 11b, 11g sends out a response signal of no abnormality to the network node apparatus 20a, 20h. The determination device 11a, 11h for the network node apparatus 20a, 20h that has received this response signal determines that there is no fault in the interval, and sends the optical test signal to the next network node apparatus 20c, 20f. The above operation is repeated in the same manner while extending the distance between the network node apparatus that originates the optical test signal and the network node apparatus that sends the response signal by every one hop. Thereby, it is determined whether or not there is any fault in the link or the network node apparatus.

In FIGS. 14 and 16, assuming that the trial numbers of fault location checks that are performed till the fault location is found from the network node apparatuses at both ends are M and N (M and N are natural numbers), respectively, and the number of hops for the network is (N+M-1), the procedure for identifying the fault location minutely will be set forth. In FIGS. 14 and 16, in a case where the network node apparatus 20e can not receive the optical test signal within a certain time period due to disconnection of the link in the N-th operation, (a path of the dotted line N in FIGS. 14 and 16), or the optical test signal received by the determination device 11e is degraded, the network node apparatus 20e returns a response of fault detection as the response signal to the network node apparatus 20a (the arrow of solid line in FIGS. 14 and 16).

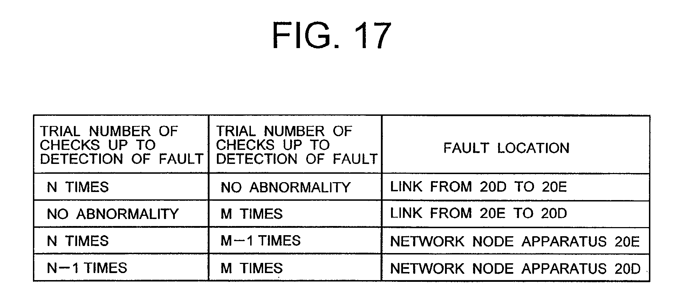

At this time, the possibility of fault occurrence including the signal degraded location may be somewhere in the bi-directional link between the network node apparatuses 20d and 20e, or the network node apparatus 20e. On the other hand, it will be found that the network node apparatus 20e has no fault from the response signal to the optical test signal that the test transmitter 52 for the determination device 11h at the other end originates, and the fault location can be identified in the link between the network node apparatuses 20d and 20e. The relation between the trial number of fault location checks up to the fault detection and the detected fault location in such case is shown in FIG. 17.

With the above procedure, it is possible to identify the range where the fault occurs in the transparent optical network. Moreover, the optical test signal is terminated in each network node apparatus, and various characteristics of the optical signal are measured, whereby the fault can be detected, including the signal quality.

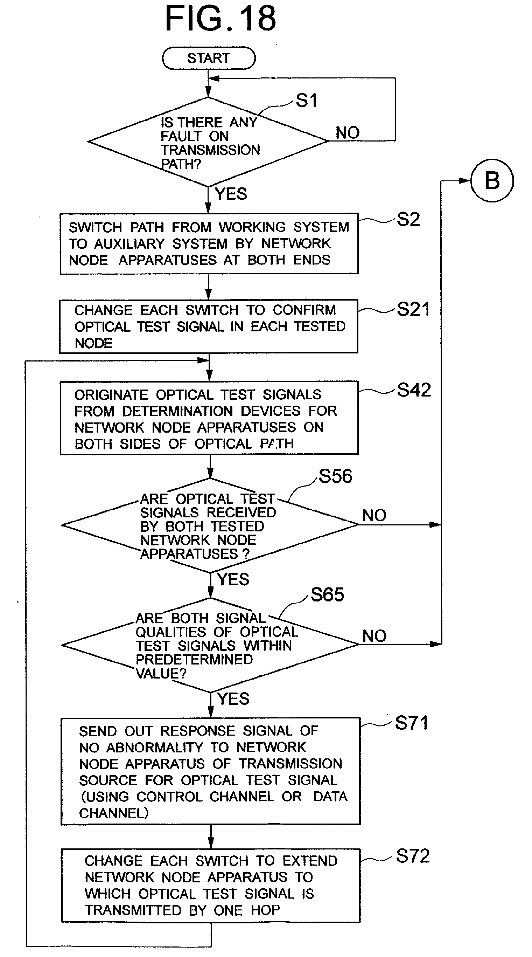

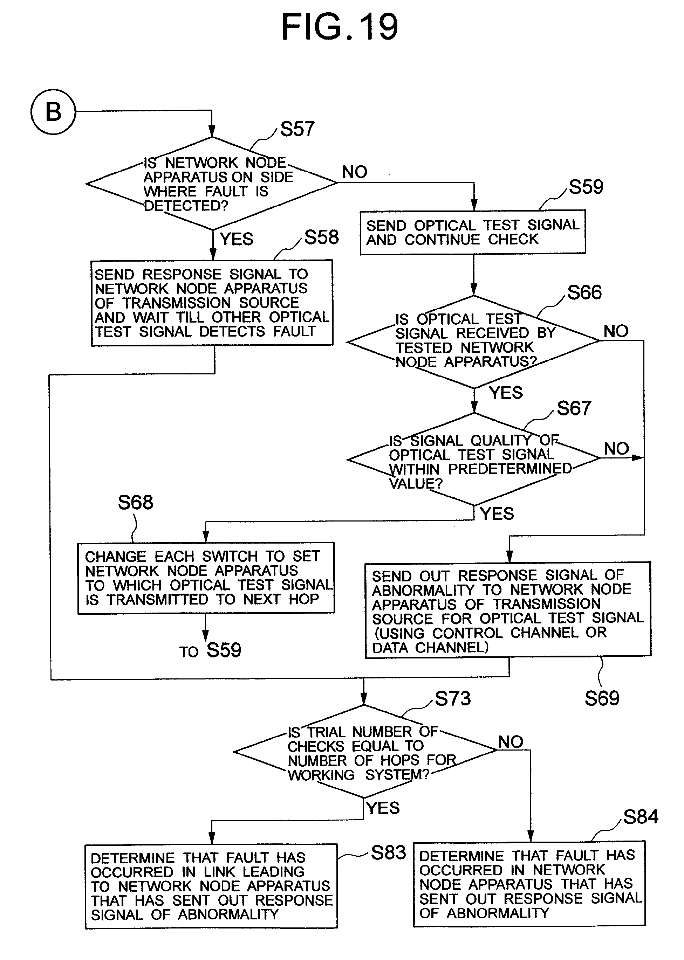

The fault location detecting operation as shown in FIGS. 14 and 16 will be briefly set forth, using flowcharts of FIGS. 18 and 19. The processings at S1 and S2 are the same as those in FIG. 9. At S21, the switch is changed to allow confirmation for the optical test signal at the tested node. And at S42, the optical test signals are originated from the determination devices of the network node apparatuses at both ends. At S56, it is determined whether or not the optical test signals are received by the tested network node apparatuses respectively. If both the optical test signals are received (S56: Y), it is determined whether or not both the optical test signals are within the predetermined value at S65. If both the optical test signals are within the predetermined value (S65: Y), response signals of no abnormality are sent out to the network node apparatuses that have sent the optical test signals through the control channels or data channels at S71. And at S72, each switch is changed to extend the network node apparatuses to which the optical test signals are sent out by one hop. Then, the processing at S42 is performed again.

If both the optical test signals are not received (S56: N), or if both the signal qualities of the optical test signals are not within the predetermined value (S65: N), the procedure transfers to S57. At S57, it is determined whether or not the negative result at S56 or S65 is the network node apparatus on the side where the fault is detected. That is, the checks are performed, beginning with the network node apparatuses at both ends in the same manner as in FIGS. 9 and 10. In a case where any fault is detected in the check for one side and the check for one side is ended (S57: Y), a response signal of abnormality is sent out to the network node apparatus of transmission source, and the procedure waits till the fault is detected in the other check (S58). If no fault is detected in the other check (S57: N), the optical test signal is transmitted at S59, and the check is continued.

In the processings at S66 and S67, it is determined whether or not the optical test signal is received by the tested network node apparatus, or the signal quality of the optical test signal received by the tested network node apparatus is within the predetermined value. If the optical test signal is received (S66: Y), and the signal quality of the optical test signal is within the predetermined value (S67: Y), it follows that no fault is detected through the loop on the side where the check is continued at S59. Therefore, at S68, the optical switch is changed to switch the network node apparatus to which the optical test signal is transmitted into the next hop. Then, the processing at S59 is performed again.

The check is continued in the processing at S59. If the optical test signal is not received by the tested network node apparatus (S66: N), or the signal quality of the optical test signal received by the tested network node apparatus is not within the predetermined value (S67: N), the procedure transfers to S69. At S69, a response signal of abnormality is sent out to the network node apparatus that has transmitted the optical test signal through the control channel or the data channel.

At S73, it is determined whether or not the total trial number of checks including the case of detecting the fault at S58 and the case of detecting the fault while continuing the check at S59 (the total trial number of checks from both ends) is equal to the number of hops for the working system. If the trial number of checks is equal to the number of hops (S73: Y), it is determined that the fault occurs in the link to the network node apparatus that has sent out the response signal of abnormality (S83). On the other hand, if the trial number of checks is different from the number of hops (S73: N), it is determined that the fault occurs in the network node apparatus that has sent out the response signal of abnormality (S84). That is, when the checks are performed from the network node apparatuses at both ends, the fault location is identified from both the check results.

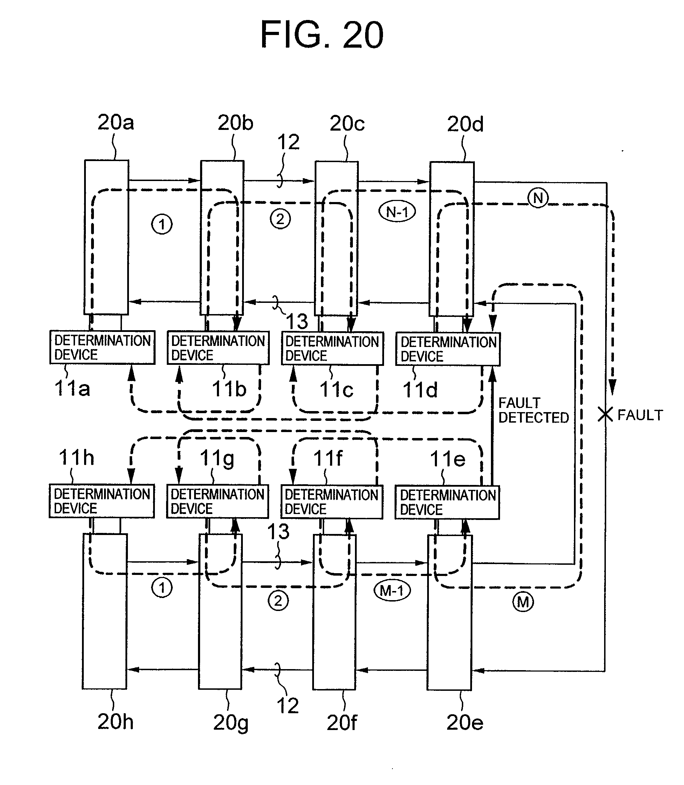

A network comprising a plurality of network node apparatuses according to another embodiment of the invention will be described below. FIG. 20 is a block diagram showing the operation when the fault location check is performed by the method in which a network node apparatus sending out a response signal originates an optical test signal to the next hop. The other like parts are designated by the same numerals in FIGS. 14, 16 and 20. The internal configuration of each of the network node apparatuses 20a to 20h and the internal configuration of each of the determination devices 11a to 11h are the same as those shown in FIG. 15 and FIGS. 3A to 3D.

In FIG. 20, at the time of performing the fault location detection, if an optical test signal is received, a response signal is sent out. The route for sending out this response signal is only shown in the case of using a control channel in FIG. 20, but the response signal can be sent out using a data channel in the same manner as in FIG. 16. A different point from FIGS. 14 and 16 is that each network node apparatus receiving the optical test signal sends out the response signal to the optical test signal to the network node apparatus that has sent out the optical test signal, and then sends out an optical test signal to the next hop.

The fault location detecting operation in the network as shown in FIG. 20 will be discussed below. After a fault occurs and the working system path is switched to the auxiliary system path, the test transmitters 52 of the determination devices 11a and 11h in the network node apparatuses 20a and 20h at both end points of the path originate optical test signals to the network node apparatuses 20b and 20g, respectively (path as indicated by the dotted line ① in FIG. 20) along the working system path where the fault has occurred. The optical test signals are received by the determination devices 11b, 11g in the network node apparatuses 20b, 20g respectively. The test receiver 51 of the determination device 11b, 11g measures the BER, S/N ratio, the optical power or optical wavelength of the received optical signal and transmits the measured result to the determination portion 57.

The determination portion 57 of the determination device 11b, 11g determines the presence or absence of any fault in the link or the network node apparatus 20b, 20g in accordance with the same procedure of the above determination methods (a) to (d). If the result of determination is not abnormal, the test transmitter 52 within the determination device 11b, 11g sends out a response signal of no abnormality to the network node apparatus 20a, 20h. The determination device 11a, 11h for the network node apparatus 20a, 20h that has received this response signal determines that there is no fault in the interval.

Then, the network node apparatus 20b, 20g sends out the response signal to the optical test signal, and sends out an optical test signal to the network node apparatus 20c, 20f (path as indicated by the dotted line ② in FIG. 20). This optical test signal is received by the determination device 11c, 11f for the network node apparatus 20c, 20f. The test receiver 51 of the determination device 11c, 11f measures the BER, S/N ratio, the optical power or optical wavelength of the received optical signal and transmits the measured result to the determination portion 57.

The determination portion 57 of the determination device 11c, 11f determines the presence or absence of any fault in the link or the network node apparatus 20c, 20f in accordance with the same procedure as the above determination methods (a) to (d). If the result of determination is not abnormal, the test transmitter 52 within the determination device 11c, 11f sends out a response signal of no abnormality to the network node apparatus 20b, 20g. The determination device 11b, 11g for the network node apparatus 20b, 20g that has received this response signal determines that there is no fault in the interval. The above operation is repeated in the same manner while using the network node apparatus of the next hop as the network node apparatus that originates the optical test signal. Thereby, it is determined whether or not there is any fault in the link or the network node apparatus.

In FIG. 20, assuming that the trial numbers of fault location checks that are performed till the fault location is found from the network node apparatuses at both ends are M and N (M and N are natural numbers), respectively, and the number of hops for the network is (N+M-1), the procedure for identifying the fault location minutely will be set forth. In FIG. 20, in a case where the network node apparatus 20e can not receive the optical test signal within a certain time period due to disconnection of the link caused by the fault between the network node apparatuses 20d and 20e in the N-th operation (a path of the dotted line N in FIG. 20), or the optical test signal received by the determination device 11e is degraded, the network node apparatus 20e returns a response of fault detection as the response signal to the network node apparatus 20d (the arrow of solid line in FIG. 20). The information of the fault location may be passed to a network control device (not shown), or may be passed via the control line to the network node apparatus at the end.

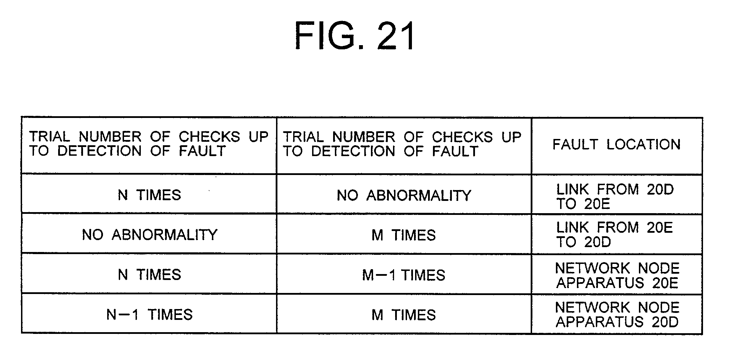

At this time, the possibility of fault occurrence including the signal degraded location may be somewhere in the bi-directional link between the network node apparatuses 20d and 20e, or the network node apparatus 20e. On the other hand, it will be found that the network node apparatus 20e has no fault from the response signal to the optical test signal that the test transmitter 52 for the determination device 11f originates. Therefor, the fault location can be identified in the link from the network node apparatus 20d to the network node apparatus 20e of the bi-directional link between the network node apparatuses 20d and 20e. The relation between the trial number of fault location checks up to the fault detection and the detected fault location in such a case is shown in FIG. 21.

With the above procedure, it is possible to identify the range where the fault occurs in the transparent optical network. Moreover, since the network node apparatus receiving an optical test signal sends an optical test signal to the next network node apparatus, the fault location can be identified more promptly than in the embodiment of FIGS. 14 and 16.

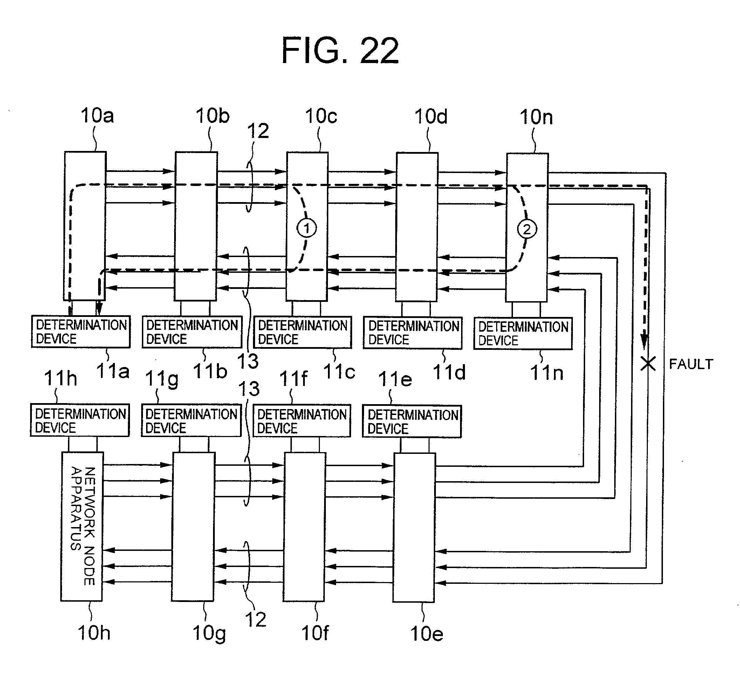

FIG. 22 is a block diagram showing the operation when the fault location check is performed by the loop back method for every plural hops in the network as shown in FIG. 2. In FIG. 22, reference numeral 10n denotes one of the network node apparatuses on the optical path for the working system, and reference numeral 11n denotes its determination device. The other like parts are designated by the same numerals in FIGS. 2 and 22.

The fault location detecting operation in the network as shown in FIG. 22 will be set forth. In FIG. 22, after a fault occurs in the working system, the fault location check is performed for every plural hops. That is, the operation of this fault location check involves setting up the path of looping back from the network node apparatus 10a through the network node apparatuses 10b and 10c to the network node apparatus 10a (path as indicated by the dotted line ① in FIG. 22) to originate the optical test signal. If no fault is detected in this path, the operation involves setting up the path of looping back from the network node apparatus 10a through the network node apparatuses 10b, 10c, 10d and 10n to the network node apparatus 10a (path as indicated by the dotted line ② in FIG. 22) to originate the optical test signal. The operation is the same as that of FIG. 2, except for the loop back for every plural hops.

Also, when the network node apparatus 10a can not receive the optical test signal within a certain time due to fault after several fault location checks for every plural hops are performed, or when the determination portion determines that the received optical test signal is degraded, the network node apparatus 10a performs the fault location check for every hop in the interval including the fault. The method of fault location check for every hop is the same as in the embodiment of FIG. 2, and the range where the fault occurs can be identified in the same manner as in FIG. 2. The method of fault location check for every plural hops as shown in FIG. 22 is adaptable to all the embodiments as shown in FIG. 4 and beyond.

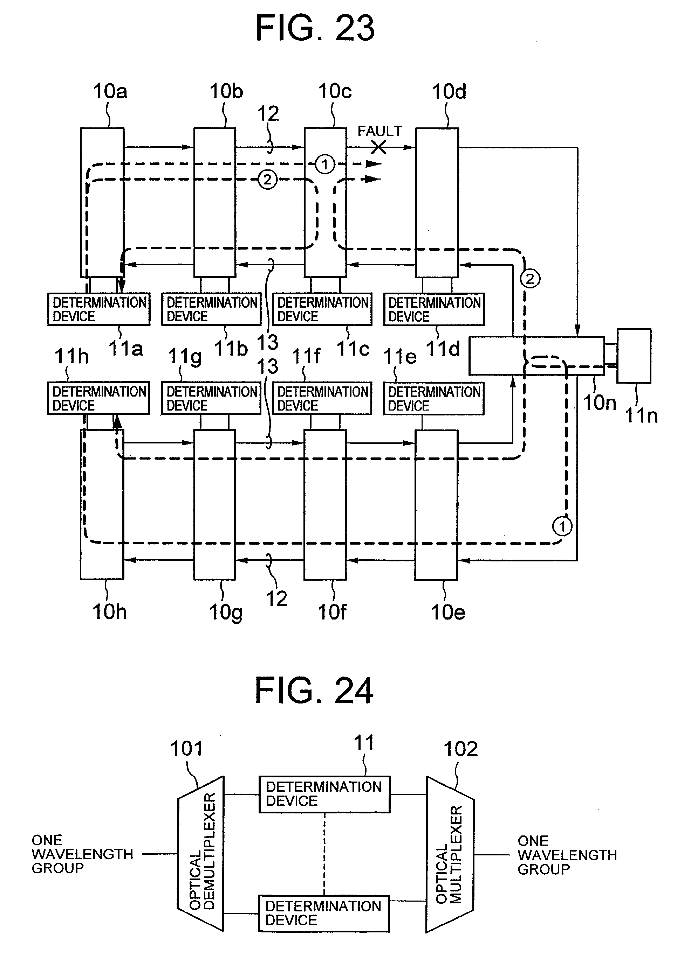

A network comprising a plurality of network node apparatuses according to another embodiment of the invention will be discussed below. In FIG. 23, reference numeral 10n denotes a network node apparatus located in the center on the working system path, and reference numeral 11n denotes its determination device. The other like parts are designated by the same numerals in FIGS. 7 and 23.

The fault location detecting method in FIG. 23 is a fault location check using the loop back method, but is different from FIG. 7 in that after the fault occurs, optical test signals are sent out from the network node apparatuses 10a, 10h at both end points of the working system path to the network node apparatus 10n located in the center on the working system path (path as indicated by the dotted line ① in FIG. 23). The network node apparatus 10n loops back the optical test signals. If the optical test signal is not returned due to fault between the network node apparatuses 10c and 10d, the fault occurrence is determined.

Then, optical test signals are sent out from the network node apparatuses 10a, 10n at both end points of the interval from the network node apparatus 10a to 10n including the fault to the network node apparatus 10c located in the center of this interval, and the fault location check is performed. The above operation is repeated to identify the fault interval.

In this case, an interval in which no fault is determined in the fault location check, namely, an interval from the network node apparatus 10h to 10n at the first trial in FIG. 23 is excluded from the fault location check, and placed into an operable state as the working system path. Thereby, the link or the network node apparatus that does not reside in the interval where the fault occurs can be employed to set up the other path, whereby the network resources can be effectively utilized. The fault location check method as shown in FIG. 23 is adaptable to all the other embodiments as described above, and shown in FIG. 7 and other figures.

FIG. 24 is a block diagram showing another configuration of the determination device 11 for the network node apparatus having a wavelength multiplexing function in all the embodiments as described above and shown in the figures following FIG. 4. In FIG. 24, one wavelength group of multiplexed wavelengths is demultiplexed by the optical demultiplexer 101. An optical signal of each of the demultiplexed wavelengths is input into the determination device 11 with the wavelength matched among plural determination devices 11 provided corresponding to the wavelengths. Then, the demultiplexed wavelengths are multiplexed by the optical multiplexer 102 again. Thereby, the network node apparatus that is provided with determination means composed of plural determination devices 11 provided corresponding to the wavelengths, the optical demultiplexer 101 and the optical multiplexer 102 can be widely applied in the transparent optical network in which the resolution of the optical switch is the wavelength group.

FIG. 25 is a block diagram showing another configuration of the determination device 11 for the network node apparatus that is switched by the wavelength group. In FIG. 25, after one wavelength in one wavelength group with X signals multiplexed in wavelength is demultiplexed by a tunable filter 110, the optical signal of the demultiplexed wavelength is input into the determination device 11, and multiplexed by the optical multiplexer 102. The network node apparatus that is provided with determination means composed of the determination device 11 for checking the signal, the tunable filter 110 and the optical multiplexer 102 can be applied in the transparent optical network in which the resolution of the optical switch is the wavelength group.

This invention is not limited to the above embodiments, but may be modified appropriately without departing from the scope of technical idea in the invention. For example, in the above embodiments, the transparent optical network is employed in performing the fault location check. However, the network is not limited to the above form, but may be widely applied in other networks.

As described above, with the invention, when a fault occurs in the network, the fault location check is performed using the working system path, whereby there is the effect that the fault location can be identified easily in the network in which each node apparatus has no electrical termination set, and the route of optical signal itself is switched.

Also, with the invention, the bit rate of the determination device for generating the optical test signal and the bit rate of the principal signal in the network are irrelevant from each other, whereby there is the effect that the low bit rate device can be employed as the test transmitter, and the network can be constituted cheaply.

Moreover, with the invention, the interval in which it is determined by the fault location check that no fault occurs is excluded from the check, and placed into an operable state as the working system path, whereby there is the effect that the network resources can be effectively utilized.

## Claims

1. A network node apparatus having an input terminal and an output terminal being each connected to a transmission line, which forms a bi-directional transmission path via said transmission line to another network node apparatus, comprising switching means for switching a signal sent out via said transmission path from said another network node apparatus to be folded back and output to said another network node apparatus again.

2. The network node apparatus according to claim 1, further comprising:
means for demultiplexing a wavelength multiplexed signal entered from said transmission line; and
means for multiplexing the wavelength demultiplexed signal again by exchanging said wavelength demultiplexed signal into a predetermined route.

3. The network node apparatus according to claim 2, further comprising wavelength conversion means for converting the wavelength of the signal sent out from said another network node apparatus into the wavelength of said wavelength demultiplexed signal.

4. The network node apparatus according to claim 1, further comprising a test signal sending component for sending out a test signal into said transmission path in response to occurrence of a fault in said transmission line or said another network node apparatus,
wherein said switching means switches the test signal sent out via said transmission path from said another network node apparatus to be folded back and output to said another network node apparatus again.

5. The network node apparatus according to claim 3, further comprising a test signal sending component for sending out a test signal into said transmission path in response to occurrence of a fault in said transmission line or said another network node apparatus,
wherein said switching means switches the test signal sent out via said transmission path from said another network node apparatus to be folded back and output to said another network node apparatus again,
and said wavelength conversion means converts the wavelength of the test signal into the wavelength of signal on said transmission line where the fault has occurred.

6. The network node apparatus according to claim 4, further comprising determination means for determining the signal quality of the test signal by receiving the test signal to effect transmission control over said test signal sending component in accordance with the determination result.

7. The network node apparatus according to claim 6, wherein said determination means comprises a test signal receiving component for receiving the test signal, and a determination portion for determining the presence or absence of the fault by comparing the signal quality of the test signal received by said test signal receiving component with a predetermined value.

8. The network node apparatus according to claim 6, wherein said test signal sending component notifies the determination result of said determination means to said another network node apparatus.

9. The network node apparatus according to claim 8, wherein said test signal sending component transmits the test signal after notifying said determination result.

10. The network node apparatus according to claim 6, wherein said determination means measures at least one of BER (Bit Error Rate), S (Signal)/N (Noise) ratio, the power of the test signal, and the wavelength of the test signal as said signal quality.

11. The network node apparatus according to claim 1, wherein the transparent transmission is performed.

12. A network system comprising a transmission line and a network node apparatus having an input terminal and an output terminal being each connected to said transmission line to form a bi-directional transmission path via said transmission line to another network node apparatus,
wherein said network node apparatus comprises switching means for switching a signal sent out via said transmission path from said another network node apparatus to be folded back and output to said another network node apparatus again.

13. The network system according to claim 12, wherein said network node apparatus comprises means for demultiplexing a wavelength multiplexed signal entered from said transmission line, and means for multiplexing the wavelength demultiplexed signal again by exchanging said wavelength demultiplexed signal into a predetermined route.

14. The network system according to claim 13, wherein said network node apparatus further comprises wavelength conversion means for converting the wavelength of the signal sent out from said another network node apparatus into the wavelength of the wavelength demultiplexed signal.

15. The network system according to claim 12, wherein said network node apparatus further comprises a test signal sending component for sending out a test signal to said transmission path in response to occurrence of a fault in said transmission line or said another network node apparatus,
wherein said switching means switches the test signal sent out via said transmission path from said another network node apparatus to be folded back and output to said another network node apparatus again.

16. The network system according to claim 14, wherein said network node apparatus further comprises a test signal sending component for sending out a test signal to said transmission path in response to occurrence of a fault in said transmission line or said another network node apparatus,
wherein said switching means switches the test signal sent out via said transmission path from said another network node apparatus to be folded back and output to said another network node apparatus again, and said wavelength conversion means converts the wavelength of the test signal into the wavelength of signal on said transmission line where the fault has occurred.

17. The network system according to claim 15, wherein said network node apparatus further comprises determination means for determining the signal quality of the test signal by receiving the test signal to effect transmission control over said test signal sending component in accordance with the determination result.

18. The network system according to claim 17, wherein said determination means comprises a test signal receiving component for receiving the test signal, and a determination portion for determining the presence or absence of the fault by comparing the signal quality of the test signal received by said test signal receiving component with a predetermined value.

19. The network system according to claim 17, wherein said test signal sending component notifies the determination result of said determination means to said another network node apparatus.

20. The network system according to claim 19, wherein said test signal sending component sends out the test signal after notifying said determination result.

21. The network system according to claim 17, wherein said determination means measures at least one of BER, S/N ratio, the power of the test signal, and the wavelength of the test signal as said signal quality.

22. The network system according to claim 12, wherein said network node apparatus makes the transparent transmission.

23. A fault location detecting method for use in a network system having a plurality of network nodes (hereinafter referred to as nodes) connected via a transmission line, comprising steps for:
sending out a test signal from a terminal node of said transmission line to a working system path (current path) after switching said working system path to an auxiliary system path (stand-by path) in response to occurrence of a fault;
folding back the test signal to said terminal node in a node that has received the test signal; and
determining the signal quality of the test signal folded back to identify the fault location based on the determination result in said terminal node.

24. A fault location detecting method for use in a network system having a plurality of nodes connected via a transmission line, comprising steps for:
sending out a test signal from a terminal node of said transmission line to a working system path(current path) after switching said working system path to an auxiliary system path (stand-by path) in response to occurrence of a fault;
sending out the determination result to said terminal node by determining the signal quality of the test signal in a node that has received the test signal; and
identifying the fault location based on the determination result in said terminal node that has received the determination result.

25. A fault location detecting method for use in a network system having a plurality of nodes connected via a transmission line, comprising steps for:
sending out a test signal from a terminal node of said transmission line to a working system path (current path) after switching said working system path to an auxiliary system path (stand-by path) in response to occurrence of a fault;
sending out the determination result to said terminal node by determining the signal quality of the test signal in a node that has received the test signal;
identifying the fault location based on the determination result in said terminal node that has received the determination result; and
sending out the test signal from the node having sent out the determination result to said working system path if there is no fault detected during the operation of the identifying step.

26. The fault location detecting method according to claim 25, further comprising a step for extending the node for sending out the test signal by every one hop in succession from the node having sent out said determination result.

27. The fault location detecting method according to claim 23,
wherein said terminal node is each of a start node and an end node of said transmission line.

28. A fault location detecting method for use in a network system having a plurality of nodes connected via a transmission line, comprising steps for:
sending out a test signal from each of a start node and an end node of said transmission line to a node located in the center of a working system path (current path) after switching said working system path to an auxiliary system path (stand-by path) in response to occurrence of a fault;
folding back the test signal to each of said start node and said end node in the node located in the center of said working system path that has received the test signal;
identifying the fault location based on the determination result by determining the signal quality of the test signal folded back at each of said start node and said end node; and
releasing the nodes outside a fault interval in said working system path to set up the other path, if there is any fault detected in either said start node or said end node during the operation of the identifying step.

29. A fault location detecting method for use in a network system having a plurality of nodes connected via a transmission line, comprising steps for:
sending out a test signal from each of a start node and an end node of said transmission line to a node located in the center of a working system path (current path) after switching said working system path to an auxiliary system path (stand-by path) in response to occurrence of a fault;
sending out the determination result to each of said start node and said end node by determining the signal quality of the test signal in the node located in the center of said working system path that has received the test signal;
identifying a fault location based on the determination result at each of said start node and said end node having received the determination result; and
releasing the nodes outside a fault interval in said working system path to set up the other path, if there is any fault detected in either said start node or said end node during the operation of the identifying step.

30. The fault location detecting method according to claim 23, further comprising a step for folding back a wavelength signal to said terminal node after converting the wavelength of the test signal into the wavelength signal on said transmission line where the fault has occurred in the node having received the test signal.

31. The fault location detecting method according to claim 24,
wherein the determination result is sent out using a channel that may or may not be different from the channel having received the test signal in the node that sends out the determination result to said terminal node.

32. The fault location detecting method according to claim 23, further comprising a step for extending the node for folding back the test signal by every one hop in succession from said terminal node.

33. The fault location detecting method according to claim 23, further comprising steps for:
extending the node for folding back the test signal by every plural hops in succession from said terminal node; and
reducing the number of hops for extending the node in the fault interval, if there is any fault detected during the operation of the extending step.

34. The fault location detecting method according to claim 23, further comprising steps for:
extending the node for folding back the test signal by every one hop in succession from said terminal node; and
folding back the test signal via the nodes outside said working system path, if there is any fault detected during the operation of the extending step.

35. The fault location detecting method according to claim 23,
wherein the signal quality of the test signal is determining by measuring at least one of BER, S/N ratio, the power of the test signal and the wavelength of the test signal.
